# EUROPÄISCHE PATENTSCHRIFT

(11) **EP 2 193 058 B1**
(45) Veröffentlichungstag und Bekanntmachung des Hinweises auf die Patenterteilung: **07.09.2011**
(21) Anmeldenummer: 08803805.4
(22) Anmeldetag: 08.09.2008
(51) Int. Cl.: B60T 17/00, B60T 17/02, F04B 39/00, F04B 43/04

(54) **MOTOR-PUMPENAGGREGAT**
MOTOR-PUMP AGGREGATE
GROUPE MOTEUR-POMPE

(30) Priorität: 11.09.2007 DE 102007043054; 24.01.2008 DE 102008005820
(43) Veröffentlichungstag der Anmeldung: 09.06.2010
(73) Patentinhaber: Continental Teves AG & Co. OHG, 60488 Frankfurt (DE)
(72) Erfinder: BACHER, Jens, 60487 Frankfurt/M (DE); MILISIC, Lazar, 65779 Kelkheim (DE); RITTER, Wolfgang, 61440 Oberursel (DE); SEITZ, Karlheinz, 64653 Lorsch (DE); RÜFFER, Manfred, 65843 Sulzbach (DE); GONZALEZ, Jose, 32549 Bad Oeynhausen (DE); STAHL, Thomas, 63546 Hammersbach (DE); JÜRGING, Michael, 65779 Kelkheim (DE); QUIAN, Yuejun, 60437 Frankfurt (DE)
(86) Internationale Anmeldenummer: PCT/EP2008/061836
(87) Internationale Veröffentlichungsnummer: WO 2009/034044

(56) Entgegenhaltungen:
- EP-A- 0 614 009
- DE-A1- 3 529 978
- GB-A- 2 310 464

## Beschreibung

Die Erfindung betrifft ein Motor-Pumpenaggregat zur Bereitstellung von Druck für eine Bremsbetätigungseinrichtung einer Kraftfahrzeugbremsanlage mit einem pneumatischen Bremskraftverstärker, umfassend eine Pumpe und einen die Pumpe antreibenden elektrischen Motor, wobei die Pumpe als Doppelmembranpumpe mit zwei gegenüberliegenden Arbeitsmembranen vorgesehen ist, welche jeweils zwischen einem Pumpengehäuse und einem Arbeitsraumdeckel eingespannt ist und dadurch einen Arbeitsraum begrenzt und welche mittels eines, Exzenter und Pleuelstangen aufweisenden Kurbelantriebs bewegbar sind, wobei jedem Arbeitsraum jeweils ein Einlasskanal mit Einlassventil und ein Auslasskanal mit Auslassventil zugeordnet ist.

Zur Bereitstellung von Vakuum für einen pneumatischen Bremskraftverstärker, dessen Innenraum in wenigstens eine Vakuumkammer und eine Arbeitskammer unterteilt ist, werden Vakuumpumpen eingesetzt, die aus der Vakuumkammer Restluft ansaugen und in die Atmosphäre ausstoßen. In der Automobilindustrie werden hierzu in der Regel Flügelzellenpumpen oder Schwenkflügelpumpen eingesetzt. Diese haben prinzipbedingt viel Reibung und müssen geschmiert werden, um eine akzeptable Lebensdauer zu erreichen. Vom Verbrennungsmotor des Kraftfahrzeuges angetriebene Vakuumpumpen mit Flügeln werden daher an den Ölkreislauf des Verbrennungsmotors angeschlossen. Dennoch muss ein nennenswerter Anteil der vom Verbrennungsmotor abgegebenen Leistung zum Antrieb einer solchen Pumpe aufgewendet werden. Und dies auch dann, wenn das Vakuum in der zu evakuierenden Kammer bereits voll ausgebildet ist. Daher ist es sinnvoll, die Vakuumpumpe mit elektrischer Energie zu betreiben und nur dann einzuschalten, wenn der absolute Druck in der Vakuumkammer über einen vorbestimmten Wert steigt.

Weiterhin kann in Fahrzeugen mit Elektro- bzw. Hybridantrieb die Vakuumpumpe nicht bzw. zeitweise nicht durch den Verbrennungsmotor angetrieben werden. Daher werden in diesen Fahrzeugen elektrisch angetriebene Vakuumpumpen eingesetzt.

Eine solche elektrisch angetriebene Pumpe mit einem Schmiermittelkreislauf auszustatten oder an einen solchen anzuschließen, würde einen unverhältnismäßig hohen Aufwand bedeuten. Somit kommen für den Einsatz in Kraftfahrzeugen mit Bremsanlagen mit elektrisch angetriebener Vakuumpumpe nur trocken laufende Vakuumpumpen in Frage. In Flügelzellenpumpen wird hierfür das selbstschmierende Material Graphit verwendet, aus dem mit hohem Aufwand die Flügel mit der erforderlichen Präzision hergestellt werden. Daher sind die Bemühungen dahingehend, zur elektrischen Bereitstellung von Bremsvakuum eine Membranpumpe zu verwenden.

Membranpumpen sind allgemein bekannt. Aus der DE 35 29 978 A1 ist ein Motor-Pumpenaggregat umfassend eine Doppelmembranpumpe mit einer rotierenden Exzenterwelle bekannt, welche von einem Elektromotor angetrieben wird.

Von der Automobilindustrie werden sehr hohe Anforderungen in Bezug auf den akustischen Komfort der Kraftfahrzeugkomponenten gestellt und von den Zulieferern robuste, langlebige Pumpen mit sehr geringen Geräuschemissionen gefordert. Diese Forderungen sind mit den bekannten Membranpumpen aufgrund von Vibrationen meist nicht zu erfüllen bzw. erfordern einen hohen Aufwand an Schalldämpfungsmaßnahmen.

Aufgabe der vorliegenden Erfindung ist es, ein Motor-Pumpenaggregat bereitzustellen, welches eine trocken laufende Pumpe umfasst und den hohen Anforderungen in Bezug auf den akustischen Komfort sowie die Lebensdauer Rechnung trägt. Eine weitere Aufgabe der Erfindung ist es, das Motor-Pumpenaggregat bezüglich seiner Pumpwirkung zu verbessern.

Die Aufgabe wird erfindungsgemäß dadurch gelöst, dass die Auslasskanäle in den Arbeitsraumdeckeln und im Pumpengehäuse derart angeordnet sind, dass aus den Arbeitsräumen verdrängte Luft in einen, den Kurbelantrieb umgebenden Innenraum des Pumpengehäuses geleitet wird, und dass eine Luftauslasseinheit vorgesehen ist, welche ein geräuscharmes Ausblasen der Luft aus dem Innenraum durch Umlenken der Luft ermöglicht. Der Innenraum, auch Kurbelraum genannt, dient so als Schalldämpfungsraum, da die ausgeblasene Luft nicht direkt in die Atmosphäre geleitet wird. Durch das Umlenken der Luft in der Luftauslasseinheit kann das Geräuschniveau zusätzlich wesentlich gesenkt werden, so dass Ausblasgeräusche nahezu vermieden werden.

Vorzugsweise weist die Luftauslasseinheit weitere Mittel zur Schalldämpfung auf, wodurch ein Luftschall beim Austreten der Luft aus dem Innenraum bzw. der Luftauslasseinheit vermindert werden kann.

Die Luftauslasseinheit verschließt gemäß einer vorteilhaften Ausführungsform der Erfindung einen Durchbruch einer Wand des Pumpengehäuses dichtend. Der Durchbruch kann somit die Funktion eines Montagefensters während der Montage des Motor-Pumpenaggregates erfüllen, wodurch die Montage erheblich vereinfacht werden kann.

Eine weitere Montageerleichterung wird gemäß einer vorteilhaften Weiterbildung der Erfindung dadurch erreicht, dass die Luftauslasseinheit ein Filtergehäuse, ein Filter, ein Luftauslassdeckel, eine Luftauslassverschlusskappe sowie eine Ventilkörper umfasst und als vormontierbare Baugruppe vorgesehen ist.

Ein Zurückströmen der ausgestoßenen Luft sowie das Eindringen flüssiger oder gasförmiger Substanzen in die Luftauslasseinheit werden vorzugsweise dadurch verhindert, dass das Filtergehäuse, die Luftauslassverschlusskappe sowie der Ventilkörper ein Rückschlagventil bilden. Alternativ können der Luftauslassdeckel, die Luftauslassverschlusskappe sowie der Ventilkörper das Rückschlagventil bilden.

Die Umlenkung der Luft in der Luftauslasseinheit erfolgt gemäß einer vorteilhaften Ausführungsform dadurch, dass zwischen dem Filtergehäuse und dem Luftauslassdeckel ein Zwischenboden vorgesehen ist, welcher die aus dem Innenraum austretende Luft umlenkt. Der Zwischenboden kann einfach in die Luftauslasseinheit integriert werden und bildet einen Teil der vormontierbaren Baueinheit.

Gemäß einer weiteren vorteilhaften Ausführungsform der Erfindung ist der Filter zwischen dem Filtergehäuse und dem Zwischenboden angeordnet und zwischen dem Luftauslassdeckel und dem Zwischenboden ist ein weiterer Filter vorgesehen. Somit wird der Luftschall sowohl vor der Umlenkung als auch danach in der Luftauslasseinheit gedämpft.

Eine unverlierbare Baugruppenbildung wird gemäß einer vorteilhaften Ausführungsform erreicht, indem das Filtergehäuse mit dem Luftauslassdeckel vernietet ist.

Vorzugsweise sind der Luftauslassdeckel und/oder das Filtergehäuse mittels Schraubelementen an der Wand befestigbar, wodurch in einfacher Weise eine abgedichtete Befestigung ermöglicht wird.

Gemäß einer vorteilhaften Weiterbildung der Erfindung sind die beiden Einlasskanäle über im Pumpengehäuse ausgebildete Kanäle miteinander verbunden und weisen einen gemeinsamen Anschluss auf. Ein zweiter Anschluss ist nicht notwendig, wodurch der Einbauraum des Motor-Pumpenaggregates optimiert werden kann.

Vorzugsweise ist ein Adapter vorgesehen, der in dem gemeinsamen Anschluss dichtend befestigt ist und der einen Adapterabgang aufweist, wobei der Adapterabgang Mittel zur Befestigung eines Schlauches aufweist. Hierdurch kann der Adapter individuell an verschiedenste Anschlussvarianten oder Kundenwünsche ohne eine Änderung des Pumpengehäuses angepasst werden. Beispielsweise ist es gemäß einer vorteilhaften Ausführungsform denkbar, dass der Anschluss als Ansaugrohrstutzen ausgebildet ist.

Eine einfache Montage des Anschlusses ergibt sich, wenn der Adapter mittels einer Rastverbindung in dem Anschluss positionierbar ist.

Dabei ist der Adapter vorzugsweise mittels eines ringförmigen Rastelementes drehbar in dem Anschluss angeordnet, wobei das Rastelement in einen Hinterschnitt einrastet.

Um ein Motor-Pumpenaggregat für verschiedenste Einbauverhältnisse zu erhalten, weist das Pumpengehäuse gemäß einer vorteilhaften Ausführungsform der Erfindung zwei gegenüberliegende Anschlüsse auf, wobei ein Anschluss verschlossen ist. Hierzu kann einer der Anschlüsse mittels eines Stopfens dicht verschlossen werden oder einer der Anschlüsse bleibt bei der Herstellung verschlossen und wird erst bei Bedarf beispielsweise durch Aufbohren geöffnet.

Das Pumpengehäuse kann vorzugsweise aus Kunststoff oder aus Aluminium hergestellt sein, wobei durch das Pumpengehäuse aus Kunststoff ein geringes Gewicht des Motor-Pumpenaggregates erreicht wird. Dagegen erlaubt ein Pumpengehäuse aus Aluminium eine gute Wärmeableitung vom Motor, wodurch die Lebensdauer des Motors verlängert werden kann.

Ebenso kann der Arbeitsraumdeckel aus Kunststoff oder aus Aluminium hergestellt sein, wodurch die Herstellung des Arbeitsraumdeckels vereinfacht werden kann.

Gemäß einer vorteilhaften Ausbildung der Erfindung weist der Arbeitsraumdeckel einen Oberdeckel und einen Unterdeckel auf, welche abdichtend miteinander verbunden sind, wobei die Ventile zwischen Oberdeckel und Unterdeckel vorgesehen sind. Dadurch können die Ventile in einfacher Weise montiert werden.

Vorzugsweise ist der Oberdeckel mit dem Unterdeckel verschweißt, vernietet oder verschraubt. Dadurch kann gleichzeitig eine Zentrierung des Oberdeckels auf dem Unterdeckel ohne weitere Mittel erfolgen.
Eine einfache Herstellung des Arbeitsraumdeckels wird gemäß einer vorteilhaften Ausführungsform der Erfindung dadurch erreicht, dass der Einlasskanal im Oberdeckel ausgebildet und der Auslasskanal zwischen Oberdeckel und Unterdeckel vorgesehen ist.

Eine optimale Ausnutzung der Durchtrittsfläche des Einlassventils wird vorzugsweise erreicht, indem sich der Einlasskanal im Bereich des Einlassventils in mehrere, kreisringförmig um eine Mittelachse des Einlassventils angeordnete Einzelkanäle aufteilt.

Vorzugsweise sind das Einlassventil sowie das Auslassventil jeweils schräg zu Symmetrieachsen der Pumpe angeordnet, wodurch eine bauraumoptimierte Ausgestaltung des Arbeitsraumdeckels möglich ist. Dabei sind die Ventile vorzugsweise als Plattenventile mit Ventilscheibe vorgesehen.

Gemäß einer vorteilhaften Ausführungsform der Erfindung sind die Ventilscheiben an den Oberdeckel bzw. den Unterdeckel angenietet, wodurch die Ventilscheiben unverlierbar befestigt sind.

Im Unterdeckel sind vorzugsweise dem Auslassventil zugeordnete Arbeitsraumdeckelöffnungen vorgesehen, wobei die Arbeitsraumdeckelöffnungen asymmetrisch um eine Mittelachse des Auslassventils angeordnet sind. Dadurch kann das so genannte Schadvolumen ohne Reduzierung des Durchtrittsvolumens der Arbeitsraumdeckelöffnungen möglichst gering gehalten werden.
Die asymmetrische Anordnung bewirkt dabei eine Geräuschreduzierung beim Durchströmen der Luft.

Vorzugsweise kann am Auslassventil ein Bypasskanal vorgesehen sein, welcher einen Druckabbau des Arbeitsraumes der Pumpe im Stillstand erlaubt. Dadurch ist insbesondere der Anlaufwiderstand bei Kälte geringer und es wird auch bei reduzierter Spannung ein zuverlässiges Anlaufen des Motor-Pumpenaggregates ermöglicht.

Gemäß einer vorteilhaften Weiterbildung der Erfindung sind die Einlass- und Auslasskanäle derart im Pumpengehäuse angeordnet, dass die beiden Arbeitsraumdeckel identisch ausgestaltet sind. Somit ist es möglich, die Arbeitsraumdeckel für beide Seiten der Pumpe gleich auszugestalten und eine Bevorratung von zwei unterschiedlichen Arbeitsraumdeckeln ist nicht erforderlich.

Eine Zentrierung des Kurbelantriebes innerhalb des Pumpengehäuses wird in vorteilhafter Weise dadurch erreicht, indem eine Motorwelle des elektrischen Motors in einem ersten, im Motor angeordneten Lager und in einem zweiten Lager gelagert ist, wobei das zweite Lager zum Teil von einem Motorgehäuse und zum Teil von dem Pumpengehäuse aufgenommen wird, und dass ein Motorwellenende in das Pumpengehäuse hineinragt. Dadurch kann auf eine zusätzliche Lagerung der Motorwelle im Pumpengehäuse verzichtet werden.

Eine Reduzierung der Einzelteile wird vorzugsweise dadurch erzielt, indem der Kurbelantrieb (Exzenter und Pleuelstangen) auf der Motorwelle angeordnet ist. Eine zusätzliche Exzenterwelle kann dadurch entfallen.

Um einen ruhigen Lauf des Motor-Pumpenaggregates zu gewährleisten, ist vorzugsweise vorgesehen, dass Mittelpunkte der Exzenter diametral bezogen auf eine Mittelachse der Motorwelle bzw. der Exzenterwelle angeordnet sind. Dadurch können die Reaktionskräfte der oszillierenden Massen nahezu ausgeglichen werden.

Zur positionierten Verpressung weisen die Exzenter Ausnehmungen zur Aufnahme von Spannstiften auf. Dadurch kann die Verpressung exakt positioniert erfolgen. Ferner ist es dadurch möglich, beide Exzenter in einem Arbeitsgang zu verpressen.

Vorzugsweise sind die Exzenter gekröpft vorgesehen, wobei entstehende Drehmomente aufgrund des Versatzes neutralisiert werden.

Gemäß einer vorteilhaften Ausführungsform sind an den Exzentern ein oder mehrere Wuchtgewichte zur Schwingungsoptimierung anbringbar. Dabei ist das Wuchtgewicht vorzugsweise an einen Exzenter angeschraubt, angeschweißt oder angenietet.

Gemäß einer vorteilhaften Weiterbildung des erfindungsgemäßen Motor-Pumpenaggregates weisen zur erleichterten Montage des Arbeitsraumdeckels das Pumpengehäuse und die Arbeitsraumdeckel Mittel zur definierten Positionierung der Arbeitsraumdeckel auf dem Pumpengehäuse auf.

Vorzugsweise erfolgt die Ansteuerung des Motor-Pumpenaggregates über eine elektronische Steuereinheit in Abhängigkeit eines Signals eines Sensors, welcher einen Druckunterschied zwischen der Vakuumkammer und der Arbeitskammer oder einen absoluten Druck in der Vakuumkammer des Bremskraftverstärkers erfasst.

Die Pleuelstangen können gewichtsoptimiert aus Kunststoff hergestellt sind, wenn die Pleuelstangen gemäß einer bevorzugten Ausführungsform im Bereich eines Pleuelauges eingespritzte Stützringe zur Stabilisierung von Kugellagern aufweisen.

Der Stützring weist vorzugsweise einen zylindrischen Rand auf, welcher zur Sicherung des Kugellagers umgeformt ist.

Gemäß einer vorteilhaften Ausführungsform der Erfindung ist zur Filterung eines gewissen Frequenzbandes ein Haltelement vorgesehen, welches eine Außenseite des Motors mit Haltearmen wenigstens teilweise umgreift, wobei zwischen der Außenseite und dem Haltelement ein Dämpfungselement angeordnet ist.

Vorzugsweise ist ein Stößel mittels einer Schweiß- oder einer Gewindeverbindung fest mit der Pleuelstange verbunden. Jedoch kann gemäß einer anderen vorteilhaften Ausführungsform der Erfindung der Stößel mit der Pleuelstange einteilig vorgesehen sein.

Weitere Merkmale, Vorteile und Anwendungsmöglichkeiten der Erfindung gehen aus der nachfolgenden Beschreibung eines Ausführungsbeispiels sowie anhand der Zeichnung hervor.

Es zeigt:
- Figur 1: ein Ausführungsbeispiel eines erfindungsgemäßen Motor-Pumpenaggregats in räumlicher Darstellung;
- Figur 2: das Motor-Pumpenaggregat gemäß Fig.1 im Längsschnitt durch eine erste Ebene;
- Figur 3: das Motor-Pumpenaggregat gemäß Fig. 1 im Längsschnitt durch eine zweite Ebene;
- Figur 4: eine Luftauslasseinheit des Motor-Pumpenaggregates gemäß Fig. 1;
- Figur 5: ein Kurbelantrieb mit Arbeitsmembran des Motor- Pumpenaggregates gemäß Fig. 1;
- Figur 6: ein Vakuum-Anschluss mit Adapter des Motor- Pumpenaggregates gemäß Fig. 1 und
- Figur 7: eine Teilansicht des Motor-Pumpenaggregates gemäß Fig. 1 im Längsschnitt durch eine weitere Ebene.

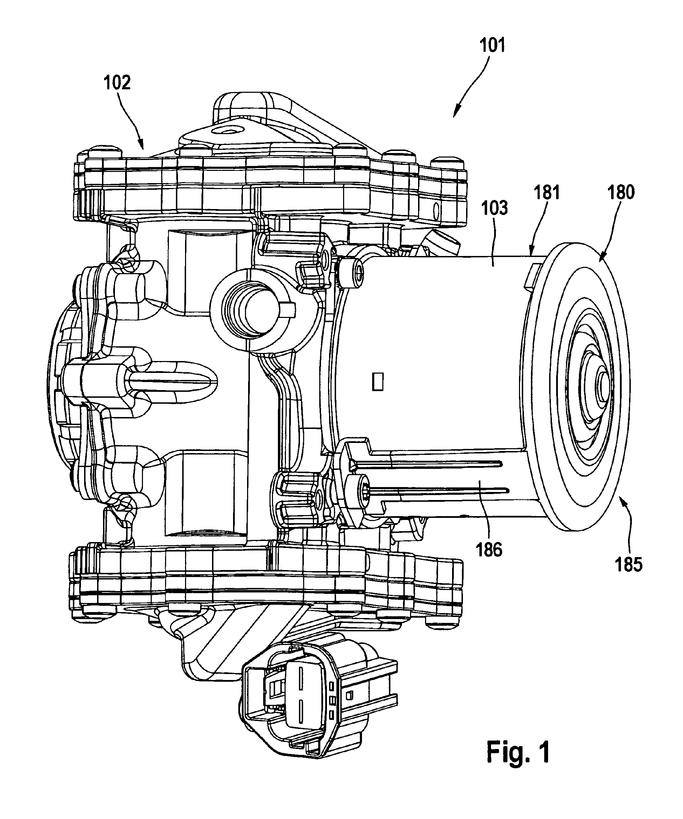

Die Fig. 1 bis 7 zeigen ein Ausführungsbeispiel eines Motor-Pumpenaggregates 101.

Fig. 1 zeigt das Motor-Pumpenaggregat 101 in räumlicher Darstellung, welches eine Pumpe 102 mit einem Pumpengehäuse 105 und einen die Pumpe 102 antreibenden elektrischen Motor 103 umfasst, wobei der Motor 103 beispielsweise als Gleichstrommotor ausgebildet sein kann.

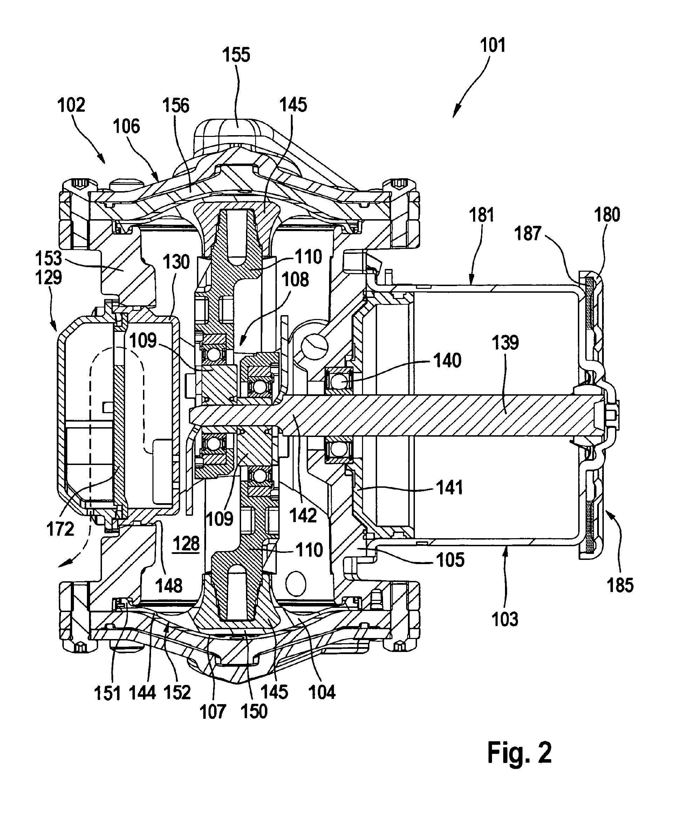

Die Pumpe 102 ist, wie insbesondere aus Fig. 2 hervorgeht, welche das Motor-Pumpenaggregat 101 im Längsschnitt durch eine erste Ebene zeigt, als Doppelmembranpumpe mit zwei gegenüberliegenden Arbeitsmembranen 104 vorgesehen, welche jeweils zwischen dem Pumpengehäuse 105 und einem Arbeitsraumdeckel 106 eingespannt ist und dadurch einen Arbeitsraum 107 begrenzt. Die Arbeitsmembrane 104 sind mittels eines Kurbelantriebs 108 gegensinnig bewegbar, welcher je Arbeitsmembran 104 einen Exzenter 109 und eine Pleuelstange 110 umfasst.

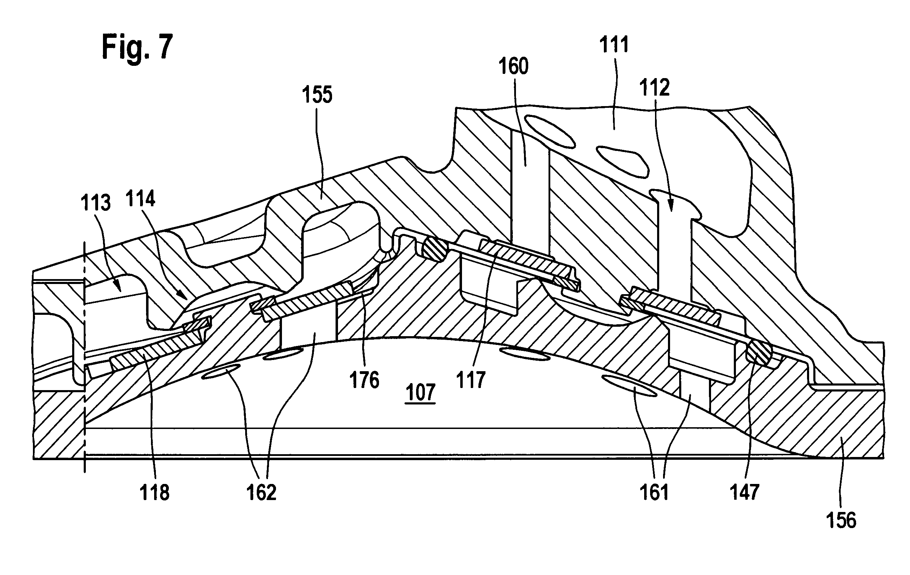

In Fig. 7 ist der Arbeitsraumdeckel 106 des Motor-Pumpenaggregates 101 geschnitten dargestellt. Es ist ersichtlich, dass der Arbeitsraumdeckel 106 einen Oberdeckel 155 sowie einen Unterdeckel 156 aufweist, die je nach Werkstoff - Kunststoff oder Aluminium - luftdicht miteinander verschweißt, vernietet bzw. verschraubt sind. Weitere Merkmale des Arbeitsraumdeckels 106 sind in der nachfolgenden Beschreibung aufgeführt.

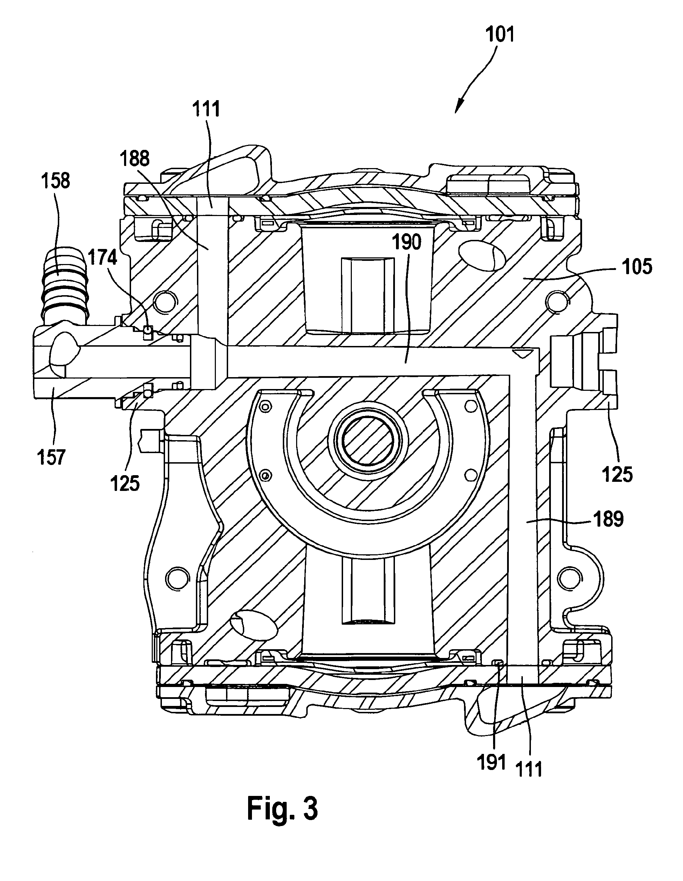

Am Pumpegehäuse 105 ist ein in Fig. 3 gezeigter Anschluss 125 mit einem darin abdichtend befestigen Adapter 157 vorgesehen, über den der angeschlossene Bremskraftverstärker evakuiert wird. Der Adapter 157 kann beispielsweise wie dargestellt abgewinkelt ausgeführt sein. Ebenso ist jedoch auch, den Kundenwünschen entsprechend, ein gerader Adapter 157 möglich. Weiter ist die Ausgestaltung eines Adapterabganges 158, an welchen ein nicht gezeigter Vakuumschlauch befestigt wird, je nach Anschlussart unterschiedlich ausgestaltet. So ist neben dem dargstellten Tannenbaumprofil auch ein Schnell- bzw. Rastverschluss denkbar.

Der Adapter 157 kann mittels einer Rastverbindung dichtend in den Anschluss 125 positioniert werden.

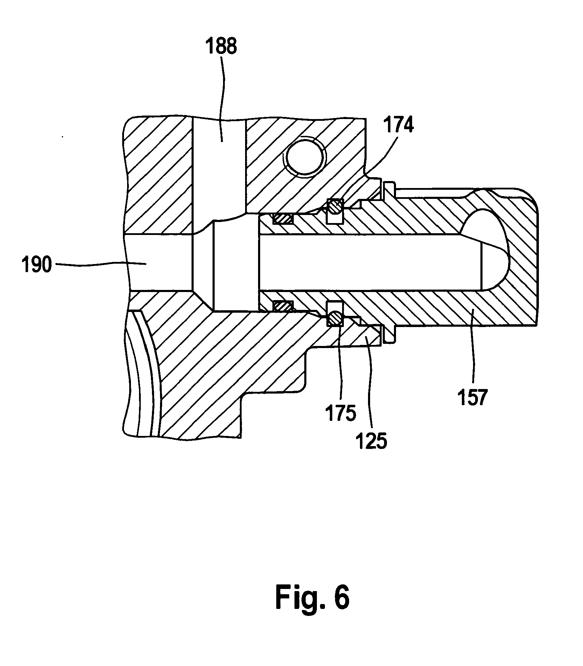

Der Adapter 157, der insbesondere in Fig. 6 dargestellt ist, ist mittels eines ringförmigen Rastelementes 174 im Anschluss 125 drehbar angeordnet. Die Rastverbindung wird durch ein Einrasten des Rastelementes 174 in einen Hinterschnitt 175 hergestellt, wodurch eine Demontage des Adapters 157 ausgeschlossen wird.

Wie insbesondere Fig. 3 zu entnehmen ist, mündet in eine Gehäusebohrung, die sich in im Pumpengehäuse 105 ausgebildete Kanäle 188,189,190 verzweigt, die zu den beiden Arbeitraumdeckeln 106 führen. Dadurch ist es möglich, die Arbeitsraumdeckel 106 für beide Seiten der Pumpe 102 gleich auszugestalten, wodurch die Montage wesentlich vereinfacht wird. Vorteilhafterweise kann ein zweiter Anschluss 125 auf der gegenüberliegenden Seite des Pumpengehäuses 105 vorgesehen sein. Damit ist es möglich, je nach Kundenwunsch und Einbauverhältnisse des Motor-Pumpenaggregates 101 den Adapter 157 entweder auf der einen oder der gegenüberliegenden Seite anzuschließen. Hierzu kann einer der Anschlüsse 125 mittels eines Stopfens dicht verschlossen werden. Ebenso ist es denkbar, einen der Anschlüsse 125, wie dargestellt, bei der Herstellung verschlossen zu lassen und erst bei Bedarf beispielsweise durch Aufbohren zu öffnen.

In jedem der Arbeitsraumdeckel 106 ist ein im Oberdeckel 155 ausgebildete Einlasskanal 111 vorgesehen, der mit den Kanälen 190 und 188 bzw. 189 mittels eines Dichtelementes luftdicht verbunden ist und die angesaugte Luft zu einem Einlassventil 112 weiterleitet. Das Einlassventil 112 ist vorzugsweise als Plattenventil mit einer Ventilscheibe 117 aus elastischem Werkstoff ausgebildet. Die von der elastomeren Ventilscheibe 117 zu bedeckende Gesamtdurchtrittsfläche wird dabei zweckmäßigerweise in mehrere kleine Durchtrittsflächen mit jeweils kreisförmigem Querschnitt aufgeteilt. Hierfür verzweigt der Einlasskanal 111 im Oberdeckel 155 in eine entsprechende Anzahl von Einzelkanälen 160, welche kreisringförmig um eine Mittelachse des Einlassventils 112 angeordnet sind. Damit wird die Durchtrittsfläche des Einlassventils 112 ausgenutzt.

Nach dem Durchströmen des Einlassventils 112 gelangt die angesaugte Luft über Arbeitsraumdeckelöffnungen 161 im Unterdeckel 156 in den Arbeitsraum 107 zwischen Membrane 104 und Arbeitsraumdeckel 106, wird dort komprimiert und über weitere Arbeitsraumdeckelöffnungen 162 zum Auslassventil 114 geführt, welches ebenfalls als Plattenventil mit einer Ventilscheibe 118 aus elastomeren Werkstoff ausgebildet ist. Wie ersichtlich ist, ist ein Auslasskanal 113 zwischen Oberdeckel 155 und Unterdeckel 156 ausgebildet.

Um den Arbeitsraum 107 mit einem sehr geringen Restvolumen zu erhalten, weist der Arbeitsraumdeckel 106 auch bei diesem Ausführungsbeispiel eine dreidimensionale Formgebung auf, die an die Enveloppe einer arbeitsraumseitigen Membranoberfläche 152 angepasst ist, welche durch die Kippbewegung eines vom Kurbelantrieb 108 bewegten Stößels 145 induziert wird. Vorzugsweise erfolgt die Anpassung der dreidimensionalen Arbeitsraumdeckelinnenkontur an die Enveloppe durch das Einhalten eines vorbestimmten kleinen Abstands zwischen den Bereichen eines schwer deformierbaren Abschnitts 150 der Arbeitsmembran 104 und dem Arbeitsraumdeckel 106, während der Abstand in den Bereichen eines leicht deformierbaren Abschnitts 144 der Arbeitsmembran 104 und eines Membranwulstes 151 zu Null gewählt wird. Der kleine Abstand der Arbeitsraumdeckelinnenkontur von der Enveloppe einer arbeitsraumseitigen Membranoberfläche 152 im zentralen Bereich der Membran 104 verhindert dessen Anschlagen am Arbeitsraumdeckel 106 beim Betrieb der Pumpe 102 und ermöglicht auch im oberen Totpunkt des Kurbelantriebs 108 eine Luftströmung zwischen dem Arbeitsraum 107 und den Arbeitsraumdeckeöffnungen 161,162.

Die Arbeitsraumdeckelöffnungen 161,162 zählen zum sogenannten Schadvolumen, d.h. dem beim Ausstoßen zurückbleibenden Restvolumen. Die darin verbleibende Luft unter Atmosphärendruck dehnt sich beim Ansaugvorgang aus, wodurch weniger Volumen angesaugt werden kann. Es ist daher sinnvoll, die Arbeitsraumdeckelöffnungen 161,162 mit möglichst geringem Volumen auszugestalten.

Ein- und Auslassventil 112,114 sind daher tangential zur Arbeitsraumdeckelinnenkontur, d.h. schräg zu den Symmetrieebenen der Pumpe 102, angeordnet und die Arbeitsraumdeckelöffnungen 161,162 sind als kurze Bohrungen ausgebildet. Diese Ausgestaltung der Arbeitsraumdeckel 106 nimmt als weiteren Vorteil einen geringen Bauraum in Anspruch.

Vom Auslassventil 114 wird die ausgestoßene Luft über den Auslasskanal 113 im Arbeitsraumdeckel 106 zu einem nicht dargestellten Auslasskanal im Pumpengehäuse 105 geleitet. Die Auslasskanäle 113 in Arbeitsraumdeckel 106 und Pumpengehäuse 105 sind luftdicht mittels eines Dichtelements verbunden. Die beiden Auslasskanäle im Pumpengehäuse 105 münden in einen Innenraum 128 des Pumpengehäuses 105, dem so genannten Kurbelraum, welcher den Kurbelantrieb 108 umgibt.

Die Ventilscheiben 117,118 können an den Oberdeckel 155 bzw. den Unterdeckel 156 angenietet sein, wodurch die Ventilscheiben 117,118 unverlierbar befestigt sind. Alternativ können die Ventilscheiben 117,118 jedoch auch nur vor der Montage eingelegt werden.

Wie aus Fig. 7 ersichtlich ist, sind die im Unterdeckel 156 vorgesehene Arbeitsraumdeckelöffnungen 162 sind zur Geräuschreduzierung asymmetrisch um eine Mittelachse des Auslassventils 114 angeordnet, wodurch eine Geräuschreduzierung beim Durchströmen der Luft bewirkt werden kann.

Des Weiteren kann am Auslassventil 114 ein Bypasskanal 176 vorgesehen sein, welcher zum Druckabbau eines Arbeitsraumes 107 der Pumpe 102 bei Stillstand dient. Hierdurch kann insbesondere bei Kälte ein geringerer Anlaufwiderstand erreicht werden und auch bei reduzierter Spannung wird ein zuverlässiges Anlaufen ermöglicht.

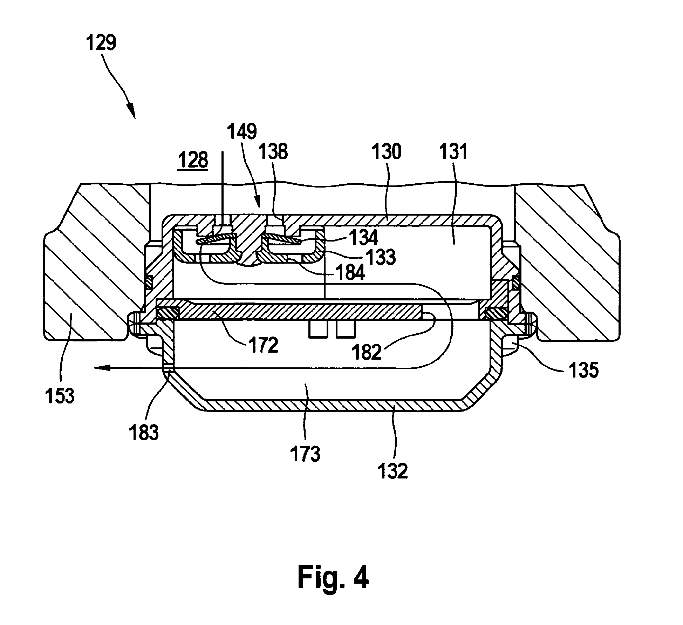

Eine in dem Pumpengehäuse 105 vorgesehene, in Fig. 4 vergrößert dargestellte Luftauslasseinheit 129 ermöglicht ein geräuscharmes Ausblasen der Luft aus dem Innenraum 128. Der Innenraum 128 dient so als Schalldämpfungsraum. Die Luftauslasseinheit 129 umfasst ein Rückschlagventil 149 umfassend einen ein- oder mehrteiligen Ventilkörper 134, das ein Zurückströmen von bereits ausgestoßener Luft sowie das Eindringen flüssiger oder gasförmiger Substanzen in den Kurbelraum 128 verhindert.

Zusätzlich wird der Luftschall beim Austreten der Luft aus dem Innenraum 128 dadurch vermindert, dass die Luftauslasseinheit 129 einen, in einem Filtergehäuse 130 angeordneten Filter 131 aufweist. Weiter umfasst die Luftauslasseinheit 129 einen Luftauslassdeckel 132, eine Luftauslassverschlusskappe 133 sowie den Ventilkörper 134 und kann als vormontierbare Baugruppe vorgesehen werden. Der Luftauslassdeckel 132 und das Filtergehäuse 130 sind mit Schraubenelementen 135 befestigt. Das Filtergehäuse 130 ist mit dem Luftauslassdeckel 132 vernietet.

Die Umlenkung der Luft in der Luftauslasseinheit erfolgt, wie in Fig. 4 ersichtlich, dadurch, dass zwischen dem Filtergehäuse 130 und dem Luftauslassdeckel 132 ein Zwischenboden 172 vorgesehen ist, welcher die aus dem Innenraum 128 austretende Luft umlenkt. Der Zwischenboden 172 kann einfach in die Luftauslasseinheit 129 integriert werden und bildet einen Teil der vormontierbaren Baueinheit.

Der Filter 131 ist zwischen dem Filtergehäuse 130 und dem Zwischenboden 172 angeordnet. Zwischen dem Luftauslassdeckel 132 und dem Zwischenboden 172 ist ein weiterer Filter 173 vorgesehen. Somit wird der Luftschall sowohl vor der Umlenkung als auch danach in der Luftauslasseinheit 129 gedämpft.

Wenn der Luftdruck im Innenraum 128 der Pumpe größer wird, als der die Pumpe umgebende Atmosphärendruck, öffnet sich das Rückschlagventil 149, indem sich der Ventilkörper 134 von Durchgangsbohrungen 138 im Luftauslassdeckel 132 zumindest teilweise abhebt, und die Luft durch Durchgangsbohrungen 184 in der Luftauslassverschlusskappe 133 und durch den Filter 131 Richtung Atmosphäre strömt.

Hierzu weist der Zwischenboden 172 einen Durchgang 182 auf. Die Luft tritt zuerst durch die Durchgangsbohrungen 138 des Filtergehäuses 130 und die Durchgangsbohrungen 184 der Luftauslassverschlusskappe 133 hindurch. Der Durchgang 182 des Zwischenbodens 172 ist derart positioniert, dass die Luft zuerst um 90°, dann um 180° umgelenkt wird, bis sie aus einer Öffnung 183 des Luftauslassdeckels 132 austritt. Durch diese Luftumlenkung kann das Geräuschniveau wesentlich gesenkt werden.

Somit kann einerseits der Druck im Innenraum 128 der Pumpe 102 nur um den geringen, zum Öffnen des Rückschlagventils 149 notwendigen Differenzdruckwert über den Atmosphärendruck anwachsen und andererseits ist der Druck im Innenraum 128 periodischen Schwankungen im Takt der mit der Kurbelbewegung einhergehenden Innenraumvolumenänderung unterworfen. Dadurch ergibt sich ein zeitlich gemittelter Innenraumdruck unterhalb des Atmosphärendrucks.

Aus Fig. 2 ist weiter zu entnehmen, dass eine Motorwelle 139 des elektrischen Motors 103 in einem ersten, nicht dargestellten, im Motor 3 angeordneten Lager und in einem zweiten Lager 140 gelagert ist, wobei das zweite Lager 140 zum Teil von einem Motorgehäuse 141 und zum Teil von dem Pumpengehäuse 105 aufgenommen wird. Ein Motorwellenende 142 ragt in das Pumpengehäuse 105 hinein, wodurch auf eine zusätzliche Lagerung der Motorwelle 139 im Pumpengehäuse 105 verzichtet werden kann.

Dadurch wird eine vorteilhafte Zentrierung des Kurbelantriebes 108 innerhalb des Pumpengehäuses 105 erreicht. Die Befestigung des Motors 103 am Pumpengehäuse 105 erfolgt mittels nicht gezeigten Schraubelementen, welche in im Pumpengehäuse 105 eingebrachte Gewindeeinsätze eingreifen, wenn das Pumpengehäuse 105 aus Kunststoff ausgebildet ist.

Die Motorwelle 139 dient bei diesem Ausführungsbeispiel gleichzeitig als Exzenterwelle, welche den Kurbelantrieb 108 mit den Exzentern 109 und den Pleuelstangen 110 trägt. Es ist jedoch auch eine separate Ausführung von Motorwelle 139 und Exzenterwelle möglich.

Um einen ruhigen Lauf des Motor-Pumpenaggregats 101 zu gewährleisten, sind Mittelpunkte der Exzenter 109 bezogen auf eine Mittelachse der Motorwelle 139 diametral und mit gleichem Abstand angeordnet, d.h. die Exzenter 109 sind um 180° versetzt. Dadurch können die Reaktionskräfte der oszillierenden Massen von Arbeitsmembranen 104, Pleuelstangen 110 und Exzentern 109 nahezu ausgeglichen werden, da in jeder Phase ihrer Bewegung der gemeinsame Schwerpunkt zumindest näherungsweise in Ruhe bleibt. Die verbleibende kleine Abweichung von einem idealen Massenausgleich ist dadurch begründet, dass die beiden Exzenter 109, wie in Fig. 2 dargestellt, axial versetzt angeordnet sind, während sich die Arbeitsmembranen 104 auf gleicher axialer Höhe bewegen.

Fig. 2 ist weiter zu entnehmen, dass die Arbeitsmembran 104 den Arbeitsraum 107 vom Kurbelraum 128 trennt und fest mit dem Stößel 145 verbunden ist, wobei der vorzugsweise nicht deformierbare Stößel 145 von dem elastisch deformierbaren Werkstoff der Arbeitsmembran 104 umspritzt sein kann. Dadurch entsteht in der Umgebung des Stößels 145 der bereits erwähnte, schwer deformierbarer Abschnitt 150 im Zentrum der Arbeitsmembran 104, der nach außen in den leicht deformierbaren Abschnitt 144 der Arbeitsmembran 104 übergeht, wobei dieser wiederum nach außen in einen Membranwulst 151 übergeht, der mit dem Pumpengehäuse 105 fest und luftdicht verbunden ist. Der Stößel 145 kann entweder mittels einer Schweiß- oder einer Gewindeverbindung fest mit der Pleuelstange 110 verbunden sein. Er kann jedoch ebenso mit der Pleuelstange 110 einteilig vorgesehen sein. Die Pleuelstangen 110 sind mittels Kugellagern 146 auf den Exzentern 109 beweglich gelagert.

Sind die Pleuelstangen 110 aus Kunststoff vorgesehen, können eingespritzte Stützringe 169 im Bereich eines Pleuelauges 171 den Sitz der Kugellager 146 im den Pleuelstangen 110 stabilisieren.

Die Pleuelstangen 110 können gewichtsoptimiert aus Kunststoff hergestellt sind, wenn die Pleuelstangen 110 gemäß einer bevorzugten Ausführungsform im Bereich eines Pleuelauges 171 eingespritzte Stützringe 169 zur Stabilisierung von Kugellagern 146 aufweisen. Der Stützring 169 weist dabei einen zylindrischen Rand 179 auf, welcher zur Sicherung des Kugellagers 146 umgeformt ist.

Ein gewichtsoptimiertes Aggregat 101 erhält man dadurch, dass das Pumpengehäuse 105 und die Arbeitsraumdeckel 106 aus Kunststoff beispielsweise mittels Spritzgießen hergestellt sind, wobei einzelne, durch Spritzguss hergestellte Teile vorzugsweise durch Ultraschallschweißen miteinander verbunden werden. Ferner können das Pumpengehäuse 105 und der Arbeitsraumdeckel 106 bzw. nur das Pumpengehäuse 105 aus Aluminium hergestellt sein, da Aluminium eine gute Wärmeableitung vom Motor 103 erlaubt. So ist eine Werkstoffkombination aus Kunststoff und Aluminium für die beiden Teile denkbar.

Vorteilhafterweise sind die Einlass- und Auslasskanäle 111,113 im Pumpengehäuse 105 derart positioniert, dass die beiden Arbeitsraumdeckel 106 identisch ausgestaltet werden können. Dabei weisen die Arbeitsraumdeckel 106 sowie das Pumpengehäuse 105 Mittel zur definierten Positionierung der Arbeitsraumdeckel 106 auf dem Pumpengehäuse 105 auf, um die Montage zu erleichtern und eine fehlerhafte Positionierung auszuschließen.

Zur Konkretisierung der Mittel zur definierten Positionierung können eine unsymmetrische Fügekontur, sowie Vorsprünge in der Verbindungsfläche vorgesehen werden. Bei einer Verbindung von Arbeitsraumdeckel 106 und Pumpengehäuse 105 durch Schrauben bietet sich als Positioniermittel ein unsymmetrisches Lochbild an.

Strömungskanäle, die die Verbindungsfläche zwischen Arbeitsraumdeckel 106 und Pumpengehäuse 105 durchdringen, sind in den Übergängen zwischen Arbeitsraumdeckel 106 und Pumpengehäuse 105 zu ihrer Umgebung hin gasdicht ausgebildet - beispielsweise durch den Einsatz von in Fig. 3 gezeigten Dichtelementen 191 mittels einer gasdichten Verschweißung. Ferner sind Dichtungen 147 zwischen Ober- und Unterdeckel 155,156 vorgesehen, wie aus Fig. 7 ersichtlich ist.

Die oben beschriebene Luftauslasseinheit 129, im wesentlichen bestehend aus Filtergehäuse 130, Filter 131,173, Luftauslassdeckel 132, Ventilverschlusskappe 133, Zwischenboden 172 und Ventilkörper 134 ist als vormontierbare Einheit ausgebildet und zum Einbau in einen Durchbruch 148 einer dem Motor 103 abgewandten Wand 153 des Pumpengehäuses 105 vorgesehen. Dabei erfüllt der Durchbruch 148 vor dem Einsetzen der Luftauslasseinheit 129 die Funktion eines Montagefensters, das einen Zugang zum Innenraum 128 des Pumpengehäuses 105 gestattet.

Die Auslasskanäle 113 münden in den Innenraum 128 des Pumpengehäuses 105, so dass dieses als akustische Dämpfungskammer zur Minderung des Austrittsschalls beim Ausstoßen von Luft aus den Arbeitsräumen 107 dient.

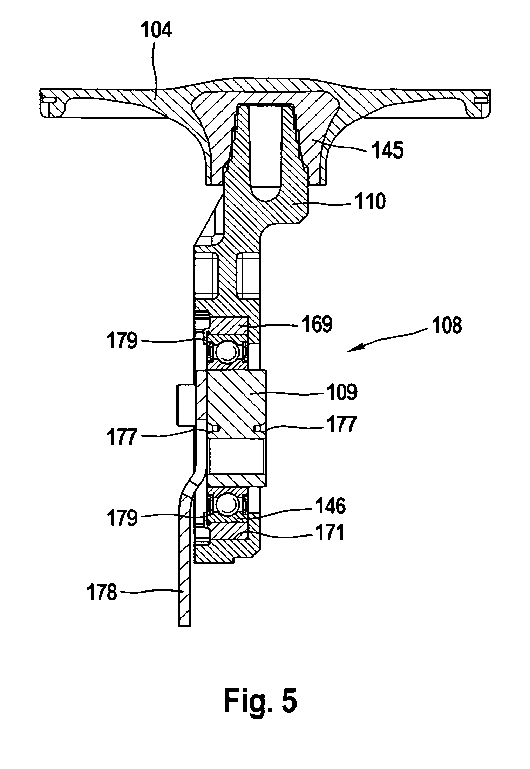

Wie insbesondere Fig. 5 zeigt, ist die Pleuelstange 110 gekröpft vorgesehen, was eine Neutralisierung des aufgrund des Pleuelstangenversatzes auftretenden Drehmomentes zur Folge hat. Hierdurch wird eine Optimierung des Schwingungsverhaltes der Pumpe 102 erzielt. Die Pleuelstange 109 ist aus Kunststoff vorgesehen, so dass die komplexe Geometrie einfach herstellbar ist. Weiter können die Arbeitsmembran 104 und die Pleuelstange 110 ohne aufwendiges Nacharbeiten und Anpassen auf Maß reibverschweißt werden.

Zur Positionierung der Exzenter 109 weisen diese Ausnehmungen 177 auf, welche der Aufnahme von Spannstiften dienen. Die beiden Exzenter 109 können so in exakter Position auf die Motorwelle 139 montiert und in einem Arbeitsgang verpresst werden.

Ferner können an dem Exzenter 109 ein oder mehrere Wuchtgewichte 178 durch Anschrauben, Anschweißen oder Annieten befestigt sein, welche der Schwingungsoptimierung dienen.

Zur Filterung von bestimmten Geräuschfrequenzen ist ein Halteelement 180 vorgesehen, welches in Fig. 1 und Fig. 2 dargestellt ist. Dieses liegt unter Zwischenlage eines Dämpfungselementes 187 an einer Stirnseite 185 des Motors 103 an und umgreift eine Außenseite 181 des Motors 103 zumindest teilweise mit mehreren Haltearmen 186, welche der Befestigung des Halteelementes 180 dienen.

Die Ansteuerung der zu den Ausführungsbeispielen beschriebenen Motor-Pumpenaggregate 101 erfolgt durch eine nicht gezeigte elektronische Steuereinheit (ECU) in Abhängigkeit von einem Signal eines Sensors, welcher einen Druckunterschied zwischen der Vakuumkammer und einer Arbeitskammer oder den absoluten Druck in der Vakuumkammer des Bremskraftverstärkers erfasst. Dabei wird das Motor-Pumpenaggregat 101 eingeschaltet, wenn das Signal einen ersten bestimmten, unteren Wert unterschreitet und ausgeschaltet, wenn das Signal einen zweiten bestimmten, oberen Wert überschreitet. Die Steuereinheit kann in eine elektronische Steuereinheit ECU - beispielsweise die des Bremssystems - integriert oder als separate Steuereinheit vorgesehen sein.

Um auch bei einem Ausfall von Teilen der Ansteuerung wie beispielsweise der elektronischen Steuereinheit das zum Erzielen einer Bremskraftverstärkung notwendige Evakuieren der Vakuumkammer des Vakuumbremskraftverstärkers zu gewährleisten, ist vorgesehen, die Ansteuerung so auszuführen, dass das Motor-Pumpenaggregat 101 bei aktiviertem Fahrzeug ("Zündung ein") und inaktiver elektronischer Steuereinheit voll bestromt wird.

Die erfindungsgemäßen Motor-Pumpenaggregate 101 finden insbesondere Anwendung in Kraftfahrzeugen mit Vakuumbremskraftverstärker und ersetzen die bisher übliche Vakuumversorgung mittels Saugvakuum bzw. verbrennungsmotorgetriebener Vakuumpumpe. Dieser Technologiewandel ist durch folgende Fakten begründet:
- Moderne Verbrennungsmotoren können weniger oder kein Saugvakuum liefern, weil die Entwickler von Verbrennungsmotoren bestrebt sind, Drosselverluste zu vermindern und daher die Vakuumhöhe absenken und weil die über den Vakuumanschluss in den Ansaugtrakt eingebrachte Nebenluft die Abgasregelung des Verbrennungsmotors durcheinander bringt.
- Die immer mehr Verbreitung findenden Verbrennungsmotoren mit Direkteinspritzung erzeugen prinzipbedingt kein Vakuum und werden daher in Stand der Technik mit direkt verbrennungsmotorgetriebenen Vakuumpumpen bestückt, wobei diese meistens an eine Nockenwelle angeschlossen werden.
- Eine direkt verbrennungsmotorgetriebenen Vakuumpumpe verursacht einen permanenten Leistungsverlust, solange der Verbrennungsmotor läuft - auch dann wenn das Vakuum bereits die benötigte Höhe erreicht hat. Es ist energetisch günstiger, eine Vakuumpumpe elektrisch anzutreiben und beim Erreichen des gewünschten Vakuumniveaus auszuschalten.
- In Hybridfahrzeugen mit einem Elektromotor und einem Verbrennungsmotor, ergeben sich Betriebszustände, bei denen der Verbrennungsmotor inaktiv ist und kein Vakuum für den Bremskraftverstärker liefert und daher ein Motor-Pumpenaggregat 1 erforderlich ist.
- In reinen Elektrofahrzeugen steht als einzige Energiequelle zur Erzeugung von Vakuum elektrische Energie zur Verfügung.

Die vorstehend beschriebenen erfindungsgemäßen Motor-Pumpenaggregate 101 sind nicht auf den beschriebenen Anwendungsfall der Bereitstellung von Vakuum beschränkt. Derartige Aggregate 101 können überall dort eingesetzt werden, wo Gase mit hohem Wirkungsgrad und mit geringen Geräuschemissionen von einem ersten Druckniveau auf ein höheres zweites Druckniveau gebracht werden sollen. Beispielsweise ist auch eine Anwendung des erfindungsgemäßen Aggregates 101 als Kompressor denkbar, wobei in dieser Anwendung vorzugsweise die Einbaurichtung der Ventile umgedreht wird, so dass das Ansaugen der Luft aus dem Innenraum 128 des Pumpengehäuses 105 und das Abgeben von komprimierter Luft über den Anschluss 125 erfolgt.

### Bezugszeichenliste

- 101: Motor-Pumpenaggregat
- 102: Pumpe
- 103: Motor
- 104: Arbeitsmembran
- 105: Pumpengehäuse
- 106: Arbeitsraumdeckel
- 107: Arbeitsraum
- 108: Kurbelantrieb
- 109: Exzenter
- 110: Pleuelstange
- 111: Einlasskanal
- 112: Einlassventil
- 113: Auslasskanal
- 114: Auslassventil

- 117: Ventilscheibe
- 118: Ventilscheibe

- 125: Anschluss

- 128: Innenraum
- 129: Luftauslasseinheit
- 130: Filtergehäuse
- 131: Filter
- 132: Luftauslassdeckel
- 133: Luftauslassverschlusskappe
- 134: Ventilkörper
- 135: Schraubenelement

- 138: Durchgangsbohrung
- 139: Motorwelle
- 140: Lager
- 141: Motorgehäuse
- 142: Motorwellenende
- 143:
- 144: Abschnitt
- 145: Stößel
- 146: Kugellager
- 147: Dichtelement
- 148: Durchbruch
- 149: Rückschlagventil
- 150: Abschnitt
- 151: Membranwulst
- 152: Membranoberfläche
- 153: Wand

- 155: Oberdeckel
- 156: Unterdeckel
- 157: Adapter
- 158: Adapterabgang
- 159:
- 160: Einzelkanal
- 161: Arbeitsraumdeckelöffnung
- 162: Arbeitsraumdeckelöffnung

- 171: Pleuelauge
- 172: Zwischenboden
- 173: Filter
- 174: Rastelement
- 175: Hinterschnitt
- 176: Bypasskanal
- 177: Ausnehmung
- 178: Wuchtgewicht
- 179: Rand
- 180: Halteelement
- 181: Außenseite
- 182: Durchgang
- 183: Öffnung
- 184: Durchgangsbohrung
- 185: Stirnseite
- 186: Haltearm
- 187: Dämpfungselement
- 188: Kanal
- 189: Kanal
- 190: Kanal
- 191: Dichtelement

## Patentansprüche

1. Motor-Pumpenaggregat (101) zur Bereitstellung von Druck für eine Bremsbetätigungseinrichtung einer Kraftfahrzeugbremsanlage mit einem pneumatischen Bremskraftverstärker umfassend eine Pumpe (102) und einen die Pumpe (102) antreibenden elektrischen Motor (103), wobei die Pumpe (102) als Doppelmembranpumpe mit zwei gegenüberliegenden Arbeitsmembranen (104) vorgesehen ist, welche jeweils zwischen einem Pumpengehäuse (105) und einem Arbeitsraumdeckel (106) eingespannt ist und dadurch einen Arbeitsraum (107) begrenzt und welche mittels eines, Exzenter (109) und Pleuelstangen (110) aufweisenden Kurbelantriebs (108) bewegbar sind, wobei dem Arbeitsraum (107) jeweils ein Einlasskanal (111) mit Einlassventil (112) und ein Auslasskanal (113) mit Auslassventil (114) zugeordnet ist, **dadurch gekennzeichnet, dass** die Auslasskanäle (113) in den Arbeitsraumdeckeln (106) und im Pumpengehäuse (105) derart angeordnet vorgesehen sind, dass aus den Arbeitsräumen (107) verdrängte Luft in einen, den Kurbelantrieb umgebenden Innenraum (128) des Pumpengehäuses (105) geleitet wird, und dass eine Luftauslasseinheit (129) vorgesehen ist, welche ein geräuscharmes Ausblasen der Luft aus dem Innenraum (128) durch Umlenken der Luft ermöglicht.

2. Motor-Pumpenaggregat nach Anspruch 1, **dadurch gekennzeichnet, dass** die Luftauslasseinheit (129) weitere Mittel zur Schalldämpfung aufweist.

3. Motor-Pumpenaggregat nach Anspruch 2, **dadurch gekennzeichnet, dass** die Luftauslasseinheit (129) einen Durchbruch (148) einer Wand (153) des Pumpengehäuses (105) dichtend verschließt.

4. Motor-Pumpenaggregat nach Anspruch 3, **dadurch gekennzeichnet, dass** die Luftauslasseinheit (129) ein Filtergehäuse (130), ein Filter (131), ein Luftauslassdeckel (132), eine Luftauslassverschlusskappe (133) sowie eine Ventilkörper (134) umfasst und als vormontierbare Baugruppe vorgesehen ist.

5. Motor-Pumpenaggregat nach Anspruch 4, **dadurch gekennzeichnet, dass** das Filtergehäuse (130), die Luftauslassverschlusskappe (133) sowie der Ventilkörper (134) ein Rückschlagventil (149) bilden.

6. Motor-Pumpenaggregat nach Anspruch 5, **dadurch gekennzeichnet, dass** zwischen dem Filtergehäuse (130) und dem Luftauslassdeckel(132) ein Zwischenboden (172) vorgesehen ist, welcher die aus dem Innenraum (128) austretende Luft umlenkt.

7. Motor-Pumpenaggregat nach Anspruch 6, **dadurch gekennzeichnet, dass** der Filter (131) zwischen dem Filtergehäuse (130) und dem Zwischenboden (172) angeordnet ist und zwischen dem Luftauslassdeckel(132) und dem Zwischenboden (172) ein weiterer Filter (173) vorgesehen ist.

8. Motor-Pumpenaggregat nach Anspruch 5, 6 oder 7, **dadurch gekennzeichnet, dass** das Filtergehäuse (130) mit dem Luftauslassdeckel (132) vernietet ist.

9. Motor-Pumpenaggregat nach einem der Ansprüche 4 bis 8, **dadurch gekennzeichnet, dass** der Luftauslassdeckel (132) und/oder das Filtergehäuse (130) mittels Schraubelementen (135) an der Wand (153) befestigbar sind.

10. Motor-Pumpenaggregat nach einem der vorangegangenen Ansprüche, **dadurch gekennzeichnet, dass** die beiden Einlasskanäle (111) über im Pumpengehäuse (105) ausgebildete Kanäle (188,189,190) miteinander verbunden sind und einen gemeinsamen Anschluss (125) aufweisen.

11. Motor-Pumpenaggregat nach Anspruch 10, **dadurch gekennzeichnet, dass** ein Adapter (157) vorgesehen ist, der in dem gemeinsamen Anschluss (125) dichtend befestigt ist und der einen Adapterabgang (158) aufweist, wobei der Adapterabgang (158) Mittel zur Befestigung eines Schlauches aufweist.

12. Motor-Pumpenaggregat nach Anspruch 11, **dadurch gekennzeichnet, dass** der Adapter (157) mittels einer Rastverbindung in dem Anschluss (125) positionierbar ist.

13. Motor-Pumpenaggregat nach Anspruch 12, **dadurch gekennzeichnet, dass** der Adapter (157) mittels eines ringförmigen Rastelementes (174) drehbar in dem Anschluss (125) angeordnet ist, wobei das Rastelement (174) in einen Hinterschnitt (175) einrastet.

14. Motor-Pumpenaggregat nach einem der Ansprüche 10 bis 13, **dadurch gekennzeichnet, dass** das Pumpengehäuse (105) zwei gegenüberliegende Anschlüsse (125) aufweist, wobei ein Anschluss (125) verschlossen ist.

15. Motor-Pumpenaggregat nach einem der vorangegangenen Ansprüche, **dadurch gekennzeichnet, dass** das Pumpengehäuse (105) aus Kunststoff oder aus Aluminium hergestellt ist.

16. Motor-Pumpenaggregat nach einem der vorangegangenen Ansprüche, **dadurch gekennzeichnet, dass** der Arbeitsraumdeckel (106) aus Kunststoff oder aus Aluminium hergestellt ist.

17. Motor-Pumpenaggregat nach einem der vorangegangenen Ansprüche, **dadurch gekennzeichnet, dass** der Arbeitsraumdeckel (106) einen Oberdeckel (155) und einen Unterdeckel (156) aufweist, welche abdichtend miteinander verbunden sind, wobei die Ventile (112,114) zwischen Oberdeckel (155) und Unterdeckel (156) vorgesehen sind.

18. Motor-Pumpenaggregat nach Anspruch 17, **dadurch gekennzeichnet, dass** der Oberdeckel (155) mit dem Unterdeckel (156) verschweißt, vernietet oder verschraubt ist.

19. Motor-Pumpenaggregat nach Anspruch 18, **dadurch gekennzeichnet, dass** der Einlasskanal (111) im Oberdeckel (155) ausgebildet ist und der Auslasskanal(113) zwischen Oberdeckel (155) und Unterdeckel (156) vorgesehen ist.

20. Motor-Pumpenaggregat nach Anspruch 19, **dadurch gekennzeichnet, dass** sich der Einlasskanal (111) im Bereich des Einlassventils (112) in mehrere, kreisringförmig um eine Mittelachse des Einlassventils (112) angeordnete Einzelkanäle (160) aufteilt.

21. Motor-Pumpenaggregat nach Anspruch 19 oder 20, **dadurch gekennzeichnet, dass** das Einlassventil (112) sowie das Auslassventil (114) jeweils schräg zu Symmetrieachsen der Pumpe (102) angeordnet ist.

22. Motor-Pumpenaggregat nach Anspruch 21, **dadurch gekennzeichnet, dass** die Ventile (112,114) als Plattenventile mit Ventilscheibe (117,118) vorgesehen sind.

23. Motor-Pumpenaggregat nach Anspruch 22, **dadurch gekennzeichnet, dass** die Ventilscheiben (117,118) an den Oberdeckel (155) bzw. den Unterdeckel (156) angenietet sind.

24. Motor-Pumpenaggregat nach Anspruch 22 oder 23, **dadurch gekennzeichnet, dass** im Unterdeckel (156) dem Auslassventil (114) zugeordnete Arbeitsraumdeckelöffnungen (162) vorgesehen sind, wobei die Arbeitsraumdeckelöffnungen (162) asymmetrisch um eine Mittelachse des Auslassventils (114) angeordnet sind.

25. Motor-Pumpenaggregat nach Anspruch 23 oder 24, **dadurch gekennzeichnet, dass** am Auslassventil (114) ein Bypasskanal (176) vorgesehen ist.

26. Motor-Pumpenaggregat nach einem der vorangegangenen Ansprüche 17 bis 25, **dadurch gekennzeichnet, dass** die Einlass- und Auslasskanäle (111,113) derart im Pumpengehäuse (105) angeordnet sind, dass die beiden Arbeitsraumdeckel (106) identisch ausgestaltet sind.

27. Motor-Pumpenaggregat nach einem der vorangegangenen Ansprüche, **dadurch gekennzeichnet, dass** eine Motorwelle (139) des elektrischen Motors (103) in einem ersten, im Motor (103) angeordneten Lager und in einem zweiten Lager (140) gelagert ist, wobei das zweite Lager (140) zum Teil von einem Motorgehäuse (141) und zum Teil von dem Pumpengehäuse (105) aufgenommen wird, und dass ein Motorwellenende (142) in das Pumpengehäuse (105) hineinragt.

28. Motor-Pumpenaggregat nach Anspruch 27, **dadurch gekennzeichnet, dass** der Kurbelantrieb (108) (Exzenter (109) und Pleuelstangen(110)) auf der Motorwelle (139) angeordnet ist.

29. Motor-Pumpenaggregat nach Anspruch 28, **dadurch gekennzeichnet, dass** Mittelpunkte der Exzenter (109) diametral bezogen auf eine Mittelachse der Motorwelle (139) bzw. der Exzenterwelle (143) angeordnet sind.

30. Motor-Pumpenaggregat nach einem der vorangegangenen Ansprüche, **dadurch gekennzeichnet, dass** die Exzenter (109) Ausnehmungen (177) zur Aufnahme von Spannstiften aufweisen.

31. Motor-Pumpenaggregat nach einem der vorangegangenen Ansprüche, **dadurch gekennzeichnet, dass** die Exzenter (109) gekröpft vorgesehen sind.

32. Motor-Pumpenaggregat nach einem der vorangegangenen Ansprüche, **dadurch gekennzeichnet, dass** an den Exzentern (109) ein oder mehrere Wuchtgewichte (178) zur Schwingungsoptimierung anbringbar sind.

33. Motor-Pumpenaggregat nach Anspruch 32, **dadurch gekennzeichnet, dass** das Wuchtgewicht (178) an einen Exzenter (109) angeschraubt, angeschweißt oder angenietet ist.

34. Motor-Pumpenaggregat nach einem der vorangegangenen Ansprüche, **dadurch gekennzeichnet, dass** das Pumpengehäuse (105) und die Arbeitsraumdeckel (106) Mittel zur definierten Positionierung der Arbeitsraumdeckel (106) auf dem Pumpengehäuse (105) aufweisen.

35. Motor-Pumpenaggregat nach einem der vorangegangenen Ansprüche, **dadurch gekennzeichnet, dass** die Ansteuerung des Motor-Pumpenaggregates (101) über eine elektronische Steuereinheit in Abhängigkeit eines Signals eines Sensors erfolgt, welcher einen Druckunterschied zwischen der Vakuumkammer und der Arbeitskammer oder einen absoluten Druck in der Vakuumkammer des Bremskraftverstärkers erfasst.

36. Motor-Pumpenaggregat nach einem der vorangegangenen Ansprüche, **dadurch gekennzeichnet, dass** die Pleuelstangen (110) im Bereich eines Pleuelauges (171) eingespritzte Stützringe (169) zur Stabilisierung von Kugellagern (146) aufweisen.

37. Motor-Pumpenaggregat nach Anspruch 36, **dadurch gekennzeichnet, dass** der Stützring (169) einen zylindrischen Rand (179) aufweist, welcher zur Sicherung des Kugellagers (146) umgeformt ist.

38. Motor-Pumpenaggregat nach einem der vorangegangenen Ansprüche, **dadurch gekennzeichnet, dass** ein Haltelement (180) vorgesehen ist, welches eine Außenseite (181) des Motors (103) mit Haltearmen (186) wenigstens teilweise umgreift, wobei zwischen der Außenseite (181) und dem Haltelement (180) ein Dämpfungselement (187) angeordnet ist.

39. Motor-Pumpenaggregat nach einem der vorangegangenen Ansprüche, **dadurch gekennzeichnet, dass** ein Stößel (145) mittels einer Schweiß- oder einer Gewindeverbindung fest mit der Pleuelstange (110) verbunden ist.

40. Motor-Pumpenaggregat nach einem der vorangegangenen Ansprüche 1 bis 38, **dadurch gekennzeichnet, dass** ein Stößel (145) mit der Pleuelstange (110) einteilig vorgesehen ist.

41. Kraftfahrzeugbremsanlage, **dadurch gekennzeichnet, dass** die Kraftfahrzeugbremsanlage ein Motor-Pumpenaggregat (101) nach einem der vorangegangenen Ansprüche umfasst.

## Claims

1. Motor/pump assembly (101), for the provision of pressure for a brake actuation device of a motor vehicle brake system with a pneumatic brake booster comprising a pump (102) and an electric motor (103) driving the pump (102), the pump (102) being provided as a double-diaphragm pump with two mutually opposite working diaphragms (104) which are in each case tension-mounted between a pump casing (105) and a working-space cover (106) and thereby delimit a working space (107) and which can be moved by means of a crank drive (108) having eccentrics (109) and connecting rods (110), the working space (107) being assigned in each case an inlet duct (111) with an inlet valve (112) and an outlet duct (113) with an outlet valve (114), **characterized in that** the outlet ducts (113) are provided so as to be arranged in the working-space covers (106) and in the pump casing (105) in such a way that air displaced out of the working spaces (107) is conducted into an inner space (128), surrounding the crank drive, of the pump casing (105), and **in that** an air outlet unit (129) is provided, which allows a low-noise blow-out of the air from the inner space (128) as a result of the deflection of the air.

2. Motor/pump assembly according to Claim 1, **characterized in that** the air outlet unit (129) has further means for sound damping.

3. Motor/pump assembly according to Claim 2, **characterized in that** the air outlet unit (129) closes a perforation (148) in a wall (153) of the pump casing (105) sealingly.

4. Motor/pump assembly according to Claim 3, **characterized in that** the air outlet unit (129) comprises a filter housing (130), a filter (131), an air outlet cover (132), an air outlet closing cap (133) and a valve body (134) and is provided as a premountable subassembly.

5. Motor/pump assembly according to Claim 4, **characterized in that** the filter housing (130), the air outlet closing cap (133) and the valve body (134) form a non-return valve (149).

6. Motor/pump assembly according to Claim 5, **characterized in that** an intermediate bottom (172) is provided between the filter housing (130) and the air outlet cover (132) and deflects the air emerging from the inner space (128).

7. Motor/pump assembly according to Claim 6, **characterized in that** the filter (131) is arranged between the filter housing (130) and the intermediate bottom (172), and a further filter (173) is provided between the air outlet cover (132) and the intermediate bottom (172).

8. Motor/pump assembly according to Claim 5, 6 or 7, **characterized in that** the filter housing (130) is riveted to the air outlet cover (132).

9. Motor/pump assembly according to one of Claims 4 to 8, **characterized in that** the air outlet cover (132) and/or the filter housing (130) can be fastened to the wall (153) by means of screw elements (135).

10. Motor/pump assembly according to one of the preceding claims, **characterized in that** the two inlet ducts (111) are connected to one another via ducts (188, 189, 190) formed in the pump casing (105) and have a common connection (125).

11. Motor/pump assembly according to Claim 10, **characterized in that** an adapter (157) is provided, which is fastened sealingly in the common connection (125) and which has an adapter exit (158), the adapter exit (158) having means for fastening a hose.

12. Motor/pump assembly according to Claim 11, **characterized in that** the adapter (157) can be positioned in the connection (125) by means of a latching connection.

13. Motor/pump assembly according to Claim 12, **characterized in that** the adapter (157) is arranged rotatably in the connection (125) by means of an annular latching element (174), the latching element (174) being latched into an undercut (175).

14. Motor/pump assembly according to one of Claims 10 to 13, **characterized in that** the pump casing (105) has two mutually opposite connections (125), one connection (125) being closed.

15. Motor/pump assembly according to one of the preceding claims, **characterized in that** the pump casing (105) is produced from plastic or from aluminium.

16. Motor/pump assembly according to one of the preceding claims, **characterized in that** the working-space cover (106) is produced from plastic or from aluminium.

17. Motor/pump assembly according to one of the preceding claims, **characterized in that** the working-space cover (106) has an upper cover (155) and a lower cover (156) which are connected sealingly to one another, the valves (112, 114) being provided between the upper cover (155) and lower cover (156).

18. Motor/pump assembly according to Claim 17, **characterized in that** the upper cover (155) is welded, riveted or screwed to the lower cover (156).

19. Motor/pump assembly according to Claim 18, **characterized in that** the inlet duct (111) is formed in the upper cover (155), and the outlet duct (113) is provided between the upper cover (155) and lower cover (156).

20. Motor/pump assembly according to Claim 19, **characterized in that** the inlet duct (111) is divided in the region of the inlet valve (112) into a plurality of individual ducts (160) arranged annularly about a mid-axis of the inlet valve (112).

21. Motor/pump assembly according to Claim 19 or 20, **characterized in that** the inlet valve (112) and the outlet valve (114) are in each case arranged obliquely with respect to axes of symmetry of the pump (102).

22. Motor/pump assembly according to Claim 21, **characterized in that** the valves (112, 114) are provided as plate valves with a valve disc (117, 118).

23. Motor/pump assembly according to Claim 22, **characterized in that** the valve discs (117, 118) are riveted to the upper cover (155) and the lower cover (156) respectively.

24. Motor/pump assembly according to Claim 22 or 23, **characterized in that** working-space cover orifices (162) assigned to the outlet valve (114) are provided in the lower cover (156), the working-space cover orifices (162) being arranged asymmetrically about a mid-axis of the outlet valve (114).

25. Motor/pump assembly according to Claim 23 or 24, **characterized in that** a bypass duct (176) is provided on the outlet valve (114).

26. Motor/pump assembly according to one of the preceding Claims 17 to 25, **characterized in that** the inlet and outlet ducts (111, 113) are arranged in the pump casing (105) in such a way that the two working-space covers (106) are configured identically.

27. Motor/pump assembly according to one of the preceding claims, **characterized in that** a motor shaft (139) of the electric motor (103) is mounted in a first bearing arranged in the motor (103) and in a second bearing (140), the second bearing (140) being received partly by a motor housing (141) and partly by the pump casing (105), and **in that** a motor-shaft end (142) projects into the pump casing (105).

28. Motor/pump assembly according to Claim 27, **characterized in that** the crank drive (108) (eccentrics (109) and connecting rods (110)) is arranged on the motor shaft (139).

29. Motor/pump assembly according to Claim 28, **characterized in that** centre points of the eccentrics (109) are arranged diametrically with respect to a mid-axis of the motor shaft (139) or of the eccentric shaft (143).

30. Motor/pump assembly according to one of the preceding claims, **characterized in that** the eccentrics (109) have recesses (177) for the reception of dowel pins.

31. Motor/pump assembly according to one of the preceding claims, **characterized in that** the eccentrics (109) are provided in bent form.

32. Motor/pump assembly according to one of the preceding claims, **characterized in that** one or more balancing weights (178) for vibration optimization can be attached to the eccentrics (109).

33. Motor/pump assembly according to Claim 32, **characterized in that** the balancing weight (178) is screwed, welded or riveted to an eccentric (109).

34. Motor/pump assembly according to one of the preceding claims, **characterized in that** the pump casing (105) and the working-space covers (106) have means for the defined positioning of the working-space covers (106) on the pump casing (105).

35. Motor/pump assembly according to one of the preceding claims, **characterized in that** the activation of the motor/pump assembly (101) takes place via an electronic control unit as a function of a signal from a sensor which detects a pressure difference between the vacuum chamber and the working chamber or an absolute pressure in the vacuum chamber of the brake booster.

36. Motor/pump assembly according to one of the preceding claims, **characterized in that** the connecting rods (110) have in the region of a connecting-rod eye (171) injection-moulded supporting rings (169) for the stabilization of ball bearings (146).

37. Motor/pump assembly according to Claim 36, **characterized in that** the supporting ring (169) has a cylindrical margin (179) which is shaped for securing the ball bearing (146).

38. Motor/pump assembly according to one of the preceding claims, **characterized in that** a holding element (180) is provided, which at least partially surrounds an outside (181) of the motor (103) by means of holding arms (186), a damping element (187) being arranged between the outside (181) and the holding element (180).

39. Motor/pump assembly according to one of the preceding claims, **characterized in that** a tappet (145) is connected fixedly to the connecting rod (110) by means of a welded or threaded connection.

40. Motor/pump assembly according to one of the preceding Claims 1 to 38, **characterized in that** a tappet (145) is provided in one piece with the connecting rod (110).

41. Motor vehicle brake system, **characterized in that** the motor vehicle brake system comprises a motor/pump assembly (101) according to one of the preceding claims.

## Revendications

1. Groupe moteur - pompe (101) pour mettre une pression à disposition d'un dispositif d'actionnement de frein d'un système de freinage de véhicule automobile équipé d'un amplificateur de force de freinage pneumatique comprenant une pompe (102) et un moteur électrique (103) entraînant en entrée la pompe (102), la pompe (102) étant pourvue, en tant que pompe à double membrane, de deux membranes de travail (104) opposées respectivement tendues entre un carter de pompe (105) et un couvercle de chambre de travail (106) et délimitant ainsi une chambre de travail (107) et lesdits moyens pouvant être déplacés à l'aide d'un entraînement de vilebrequin (108) comprenant des excentres (109) et des bielles (110), un canal d'admission (111) équipé de la soupape d'admission (112) et un canal d'échappement (113) équipé de la soupape d'échappement (114) étant respectivement associés à la chambre de travail (107), **caractérisé en ce que** les canaux d'échappement (113) sont disposés de telle sorte dans les couvercles de chambre de travail (106) et dans le carter de pompe (105) que l'air évacué hors des chambres de travail (107) est conduit dans un espace intérieur (128) du carter de pompe (105) entourant l'entraînement de vilebrequin et qu'une unité d'échappement d'air (129) est prévue, ladite unité permettant de souffler de façon peu bruyante l'air hors de l'espace intérieur (128) par déviation de l'air.

2. Groupe moteur - pompe selon la revendication 1, **caractérisé en ce que** l'unité d'échappement d'air (129) comporte d'autres moyens d'amortissement du bruit.

3. Groupe moteur - pompe selon la revendication 2, **caractérisé en ce que** l'unité d'échappement d'air (129) ferme de façon étanche un passage traversant (148) d'une paroi (153) du carter de pompe (105).

4. Groupe moteur - pompe selon la revendication 3, **caractérisé en ce que** l'unité d'échappement d'air (129) comprend un carter de filtre (130), un filtre (131), un couvercle d'échappement (132), un bouchon de fermeture d'échappement d'air (133) ainsi qu'un corps de soupape (134) et prend la forme d'un groupe modulaire prémontable.

5. Groupe moteur - pompe selon la revendication 4, **caractérisé en ce que** le carter de filtre (130), le bouchon de fermeture d'échappement d'air (133) ainsi que le corps de soupape (134) forment une soupape antiretour (149).

6. Groupe moteur - pompe selon la revendication 5, **caractérisé en ce qu'**un palier intermédiaire (172) est prévu entre le carter de filtre (130) et le couvercle d'échappement (132), ledit palier déviant l'air sortant de l'espace intérieur (128).

7. Groupe moteur - pompe selon la revendication 6, **caractérisé en ce que** le filtre (131) est disposé entre le carter de filtre (130) et le palier intermédiaire (172) et qu'un filtre (173) supplémentaire est prévu entre le couvercle d'échappement (132) et le palier intermédiaire (172).

8. Groupe moteur - pompe selon la revendication 5, 6 ou 7, **caractérisé en ce que** le carter de filtre (130) est riveté au couvercle d'échappement (132).

9. Groupe moteur - pompe selon l'une quelconque des revendications 4 à 8, **caractérisé en ce que** le couvercle d'échappement (132) et/ou le carter de filtre (130) peuvent être fixés à la paroi (153) à l'aide d'éléments vissables (135).

10. Groupe moteur - pompe selon l'une quelconque des revendications précédentes, **caractérisé en ce que** les deux canaux d'admission (111) sont reliés entre eux par le biais de canaux (188, 189, 190) réalisés dans le carter de pompe (105) et comportent un raccord (125) commun.

11. Groupe moteur - pompe selon la revendication 10, **caractérisé en ce qu'**un adaptateur (157) est prévu qui est fixé de façon étanche dans le raccord (125) commun et comporte un départ d'adaptateur (158), le départ d'adaptateur (158) comportant des moyens de fixation d'un tuyau flexible.

12. Groupe moteur - pompe selon la revendication 11, **caractérisé en ce que** l'adaptateur (157) peut être positionné dans le raccord (125) au moyen d'une jonction d'arrêt.

13. Groupe moteur - pompe selon la revendication 12, **caractérisé en ce que** l'adaptateur (157) est disposé de façon à pouvoir être pivoté dans le raccord (125) à l'aide d'un élément d'arrêt (174) en forme d'anneau, l'élément d'arrêt (174) s'encliquetant dans un détouré arrière (175).

14. Groupe moteur - pompe selon l'une quelconque des revendications 10 à 13, **caractérisé en ce que** le carter de pompe (105) comporte deux raccords (125) opposés, un raccord (125) étant obturé.

15. Groupe moteur - pompe selon l'une quelconque des revendications précédentes, **caractérisé en ce que** le carter de pompe (105) est fabriqué en plastique ou en aluminium.

16. Groupe moteur - pompe selon l'une quelconque des revendications précédentes, **caractérisé en ce que** le couvercle de chambre de travail (106) est fabriqué en plastique ou en aluminium.

17. Groupe moteur - pompe selon l'une quelconque des revendications précédentes, **caractérisé en ce que** le couvercle de chambre de travail (106) comporte un couvercle supérieur (155) et un couvercle inférieur (156) reliés entre eux de façon étanche, les soupapes (112, 114) étant prévues entre le couvercle supérieur (155) et le couvercle inférieur (156).

18. Groupe moteur - pompe selon la revendication 17, **caractérisé en ce que** le couvercle supérieur (155) est soudé, riveté ou vissé au couvercle inférieur (156).

19. Groupe moteur - pompe selon la revendication 18, **caractérisé en ce que** le canal d'admission (111) est réalisé dans le couvercle supérieur (155) et que le canal d'échappement (113) est prévu entre le couvercle supérieur (155) et le couvercle inférieur (156).

20. Groupe moteur - pompe selon la revendication 19, **caractérisé en ce que** le canal d'admission (111) se divise, dans la zone de la soupape d'admission (112), en plusieurs canaux individuels (160) disposés en forme de cercle autour d'un axe central de la soupape d'admission (112).

21. Groupe moteur - pompe selon la revendication 19 ou 20, **caractérisé en ce que** la soupape d'admission (112) ainsi que la soupape d'échappement (114) sont respectivement disposées de façon oblique par rapport aux axes de symétrie de la pompe (102).

22. Groupe moteur - pompe selon la revendication 21, **caractérisé en ce que** les soupapes (112, 114) sont pourvues, en tant que soupapes à plaque, de disques de soupape (117, 118).

23. Groupe moteur - pompe selon la revendication 22, **caractérisé en ce que** les disques de soupape (117, 118) sont rivetés contre le couvercle supérieur (155) et/ou contre le couvercle inférieur (156).

24. Groupe moteur - pompe selon la revendication 22 ou 23, **caractérisé en ce que** des ouvertures de couvercle de chambre de travail (162) associées à la soupape d'échappement (114) sont prévues dans le couvercle inférieur (156), les ouvertures de couvercle de chambre de travail (162) étant disposées de façon asymétrique autour d'un axe central de la soupape d'échappement (114).

25. Groupe moteur - pompe selon la revendication 23 ou 24, **caractérisé en ce qu'**un canal de dérivation (176) est prévu au niveau de la soupape d'échappement (114).

26. Groupe moteur - pompe selon l'une quelconque des revendications 17 à 25, **caractérisé en ce que** les canaux d'admission et d'échappement (111, 113) sont disposés de telle sorte dans le carter de pompe (105) que les deux couvercles de chambre de travail (106) sont configurés de façon identique.

27. Groupe moteur - pompe selon l'une quelconque des revendications précédentes, **caractérisé en ce qu'**un arbre de moteur (139) du moteur électrique (103) est disposé dans un premier palier placé dans le moteur (103) et dans un deuxième palier (140), le deuxième palier (140) étant logé en partie dans un carter de moteur (141) et en partie dans le carter de pompe (105) et **en ce qu'**une extrémité d'arbre de moteur (142) ressort dans le carter de pompe (105).

28. Groupe moteur - pompe selon la revendication 27, **caractérisé en ce que** l'entraînement de vilebrequin (108) (excentres (109) et bielles(110)) est disposé sur l'arbre de moteur (139).

29. Groupe moteur - pompe selon la revendication 28, **caractérisé en ce que** les points centraux des excentres (109) sont disposés de façon diamétrale par rapport à un axe central de l'arbre de moteur (139) et/ou de l'arbre d'excentre (143).

30. Groupe moteur - pompe selon l'une quelconque des revendications précédentes, **caractérisé en ce que** les excentres (109) comportent des évidements (177) pour loger les tiges de serrage.

31. Groupe moteur - pompe selon l'une quelconque des revendications précédentes, **caractérisé en ce que** les excentres (109) sont coudés.

32. Groupe moteur - pompe selon l'une quelconque des revendications précédentes, **caractérisé en ce qu'**un ou plusieurs poids (178) peuvent être placés contre les excentres (109) pour optimiser l'oscillation.

33. Groupe moteur - pompe selon la revendication 32, **caractérisé en ce que** le poids (178) est vissé, soudé ou riveté à l'excentre (109).

34. Groupe moteur - pompe selon l'une quelconque des revendications précédentes, **caractérisé en ce que** le carter de pompe (105) et le couvercle de chambre de travail (106) comportent des moyens de positionnement défini du couvercle de chambre de travail (106) sur le carter de pompe (105).

35. Groupe moteur - pompe selon l'une quelconque des revendications précédentes, **caractérisé en ce que** l'excitation du groupe moteur - pompe (101) se produit via une unité de commande électronique en fonction d'un signal d'un capteur qui détecte une différence de pression entre la chambre sous vide et la chambre de travail ou une pression absolue régnant dans la chambre sous vide de l'amplificateur de force de freinage.

36. Groupe moteur - pompe selon l'une quelconque des revendications précédentes, **caractérisé en ce que** les bielles (110) sont dotées, dans la zone d'un oeil de bielle (171), d'anneaux d'appui (169) injectés pour la stabilisation du palier sphérique (146).

37. Groupe moteur - pompe selon la revendication 36, **caractérisé en ce que** l'anneau d'appui (169) comporte un bord cylindrique (179) remodelé pour la fixation du palier sphérique (146).

38. Groupe moteur - pompe selon l'une quelconque des revendications précédentes, **caractérisé en ce qu'**un élément d'arrêt (180) est prévu qui engrène au moins en partie un côté extérieur (181) du moteur (103) à l'aide d'un bras d'arrêt (186), un élément d'amortissement (187) étant disposé entre le côté extérieur (181) et l'élément d'arrêt (180).

39. Groupe moteur - pompe selon l'une quelconque des revendications précédentes, **caractérisé en ce qu'**un plongeur (145) est relié fixement à la tige de bielle (110) à l'aide d'une liaison soudée ou d'une liaison filetée.

40. Groupe moteur - pompe selon l'une quelconque des revendications précédentes 1 à 38, **caractérisé en ce qu'**un plongeur (145) est prévu pour être formé d'un seul tenant avec la tige de bielle (110).

41. Système de freinage de véhicule automobile, **caractérisé en ce que** le système de freinage de véhicule automobile comprend un groupe moteur - pompe (101) selon l'une quelconque des revendications précédentes.
